**Europäisches Patentamt**

**European Patent Office**

**Office européen des brevets**

(19)

(11) Veröffentlichungsnummer: **0 511 415 A1**

## (12) EUROPÄISCHE PATENTANMELDUNG

(21) Anmeldenummer: **91106907.8**

(22) Anmeldetag: **28.04.91**

(51) Int. Cl.5: **F01N 3/02**, F01N 1/08

(43) Veröffentlichungstag der Anmeldung:
**04.11.92 Patentblatt 92/45**

(84) Benannte Vertragsstaaten:
**AT CH DE ES FR GB IT LI SE**

(71) Anmelder: **GYOPAR KFT**
**II, Temetö u. 50**
**Budapest(HU)**

(72) Erfinder: **Brystian, Barna**
**VII. Izabella u. 44**
**Budapest(HU)**
Erfinder: **Csernati, Balint**
**II. Temetö u. 50**
**Budapest(HU)**

(74) Vertreter: **Koepe, Gerd L.**
**Stuntzstrasse 16**
**W-8000 München 80(DE)**

(54) **Filtereinrichtung und Verfahren zur Abgasreinigung durch Filtration.**

(57) Die Erfindung betrifft eine Einrichtung zum Filtrieren von Abgasen aus Verbrennungsmotoren im Bereich des Abgassystems zwischen Austritt der Abgase aus dem Verbrennungsraum und Ausströmen in die Umgebung am Auspuff-Endrohr mit einem in den Abgasstrom an beliebiger Stelle des Abgassystems montierbaren, eine oder mehrere Einströmöffnung(en) 2 und eine oder mehrere Ausströmöffnung(en) 3 umfassenden Gehäuse 1 und in dem Gehäuse 1 angeordneten Einrichtungen zur drosselungsarmen Führung des Abgasstroms von der/den Einströmöffnung(en) 2 durch einen Expansionsraum 4, dessen Querschnitt den Strömungsquerschnitt der Einströmöffnung(en) 2 um ein Mehrfaches übersteigt, eine im äußeren Bereich 5 b mit einer Vielzahl von Löchern zum Durchströmen der Abgase versehene, im zentralen Bereich 5 a den Expansionsraum 4 gegenüber dem übrigen Bereich des Gehäuses 1 gasdicht abschließende Ringplatte 5, einen zwischen einem ersten perforierten Zylindermantel 6, dessen Achse koaxial zur Gehäuseachse 1 a ist, und einem zweiten perforierten Zylindermantel 7, dessen Achse koaxial mit der des ersten Zylindermantels 6 ist und der einen größeren Umfang als die erste Zylindermantel 6 aufweist, angeordneten Filtereinsatz 8, und danach unmittelbar zu der/den Ausströmöffnung(en) 3 des Gehäuses 1 in Richtung auf das Abgas-stromabwärts gelegene Auspuff-Endrohr des Abgassystems, sowie ein Verfahren zur Reinigung von Abgasen aus Verbrennungsmotoren durch Filtration in einem in den Abgasstrom an beliebiger Stelle des Abgassystems montierbaren Gehäuse.

Figur 1

Die Erfindung betrifft eine Filtereinrichtung, insbesondere zur Reinigung der Abgase von Verbrennungsmotoren. Insbesondere werden hierunter in der vorliegenden Anmeldung Abgase von Verbrennungsmotoren verstanden, wie sie in Kraftfahrzeugen betrieben werden. Als Beispiele werden Ottomotoren (Zweitaktmotor oder Viertaktmotor) mit beliebigen Kraftstoffen oder Kraftstoffgemischen einschließlich Hybridmotoren und Dieselmotoren (Zweitaktmotoren oder Viertaktmotoren) genannt. Grundsätzlich eignet sich die erfindungsgemäße Filtereinrichtung jedoch auch für andere Motoren. Ihre vielseitige Verwendbarkeit ist einer ihrer besonderen Vorteile gegenüber dem Stand der Technik.

Die Erfindung betrifft auch ein Verfahren zur Reinigung von Abgasen. Besonderes Augenmerk, wenn auch nicht ausschließlicher Wert, wird auch hier auf ein Verfahren zur Reinigung von Abgasen von Verbrennungsmotoren der oben genannten Art für den Betrieb in Kraftfahrzeugen gerichtet.

Es ist allgemein bekannt, daß zum Schutz der Umwelt an Verfahren zur Vorrichtungen zur Reinigung von Abgasen, insbesondere zur Reinigung von Angasen durch Filtration, immer höhere Anforderungen gestellt werden müssen. Diese steigenden Anforderungen schlagen sich im Hinblick auf die Reinigung von Auspuffgasen mit Verbrennungsmotoren betriebener Kraftfahrzeuge in gesetzlichen Bestimmungen nieder, die ein Höchstmaß an für die Umwelt schädlichen Auspuffgas-Bestandteilen festsetzen. Im Zuge strenger werdender Bestimmungen werden die Maximalwerte regelmäßig weiter abgesenkt. Technische Fortschritte bei der Einstellung des Verbrennungsvorganges in Verbrennungsmotoren und Umwelt-angepaßte, d.h. erhöhten Schadstoff-Ausstoß vermeidende Fahrweise allein genügen jedoch nicht, um den Schadstoffgehalt in Abgasen auf das wünschenswerte Maß zu senken. Unverzichtbar werden auch Verfahren und Vorrichtungen zur Reinigung der Abgase von Verbrennungsmotoren durch Filtration. Die bisher bekannten und vorgeschlagenen Lösungen zur effektiven Senkung des Schadstoffgehaltes in Auspuffgasen sind jedoch aus mehreren Gründen nicht befriedigend gewesen.

In der DE-OS 35 41 685 wird eine Vorrichtung zur Reinigung rußbeladener Abgase eines Verbrennungsmotors beschrieben, die zwischen einer koaxial zu einer Auspuff-Kammer angeordneten perforierten Innen- und Außenhülle eine Filter-Schüttung aus Herdofenkoks enthält, der aus Braunkohle hergestellt wurde. Die Braunkohlekoks enthaltende Schüttung weist eine Erstreckung auf, zu deren Durchströmung das Abgas bei gegebener Strömungsgeschwindigkeit eine Zeitdauer von 0,01 und 1 Sekunde benötigt. Der von der Braunkohlekoks-Schüttung umgebene Abgas-Kanal hat im wesentlichen den gleichen Querschnitt wie der Strömungsquerschnitt des Auspuffrohres.

Diese Filter-Vorrichtung weist in der Praxis jedoch einen gravierenden Nachteil auf. Da die die Vorrichtung durchströmenden Abgase nach Einströmen in axialer Richtung zweimal praktisch im rechten Winkel abgelenkt werden, bevor sie nach Durchströmen der Koks-Schüttung im äußeren Expansionsraum - mit weiteren Ablenkungen - in Richtung Auspuff-Endrohr strömen, wird die Motorleistung erheblich gedrosselt. Durch die umständliche Abgas-Führung wird also die Nutzleistung des Motors verringert. Darüberhinaus läßt sich der eigentliche Filtereinsatz nur sehr schlecht wechseln. Dazu muß nämlich die gesamte Filtereinrichtung aus dem Auspuffsystem ausgebaut und zerlegt werden, bevor das verbrauchte Filtermaterial gegen frisches ausgetauscht werden kann.

Aus der GB-A 2,163,696 ist darüberhinaus ein Auspuff-Filter für Verbrennungsmaschinen bekannt, in dem die Abgase in axialer Richtung aus einem Einströmbereich durch ein Vorfilter in eine innere Abgas-Kammer mit gleichem Durchmesser wie das Vorfilter und im wesentlichen gleichem Durchmesser wie der Einströmbereich strömen. Aus der inneren Kammer strömen sie nach einmaliger Ablenkung radial durch das Filtermaterial aus der Filtereinrichtung heraus.

Zwar ist im Fall der in der GB-A 2,163,696 beschriebenen Filtereinrichtung die Drosselung gegenüber anderen Vorschlägen aus dem Stand der Technik verringert; es müssen jedoch zusätzliche Einrichtungen vorgesehen werden, um eine kontrollierte Führung der Abgase zum Auspuff-Endrohr, d. h. ein Weiterströmen der Abgase in axialer Richtung zum Fahrzeugheck hin, zu ermöglichen. Eine weitere Drosselung des Abgasstroms und damit eine Verminderung des Nutzleistung des Motors ist also unvermeidlich. Darüberhinaus ist das Auswechseln der Filterkartusche mit erheblichen Problemen verbunden und wurde daher praktischen Anforderungen bei Service und Reparatur des mit dieser Filtereinrichtung ausgestatteten Fahrzeugs nicht gerecht.

Die DE-OS 26 16 131 beschreibt eine Filtereinrichtung, die am Ende des Auspuffrohres angebracht werden kann. Das Filtermaterial besteht aus hitzebeständigen Glaswolle-Fasern. Die zu filternden Gase strömen durch die Einströmöffnung in den Filtereinsatz der Vorrichtung und durchströmen die gesamte Faserfüllung in axialer Richtung. Eine wirksame Filterung erfordert eine große Menge Filtermaterial und hat im Ergebnis eine unerwartet starke Drosselung des Abgasstroms und damit eine nicht vertretbare Verringerung der Nutzleistung des Motors zur Folge. Eine Kontrolle bzw. ein Auswechseln des Filtereinsatzes war nur bei Abmontieren und Demontieren des gesamten Filterapparates möglich und wurde damit ebenfalls praktischen Erfordernissen nicht gerecht.

Aufgabe der vorliegenden Erfindung war die Beseitigung der erwähnten Nachteile des Standes der Technik durch Bereitstellung einer Filtereinrichtung, die einfach konstruiert ist und bei Service bzw. Reparatur des Fahrzeugs einfach und schnell ausgewechselt bzw. hinsichtlich ihrer Funktionsweise kontrolliert werden kann, wobei zu gewährleisten war, daß eine wirksame Filtration von Verbrennungsgasen mit einer möglichst geringen Drosselung der Strömungsgeschwindigkeit der Abgase und damit möglichst geringen Verringerung der Motor-Nutzleistung verbunden werden kann.

Eine weitere Aufgabe der Erfindung bestand darin, ein Verfahren zur Reinigung von Abgasen anzugeben, mit dem in einfacher Weise die Reinigung von Abgasen verbessert werden kann, ohne dabei den Abgasstrom stark zu drosseln und damit die Motorleistung erheblich zu verringern. Insbesondere sollte vermieden werden, daß die in den Abgasen enthaltenen Schadstoffe in die Umgebungsluft gelangen, die selbst bei optimaler Einstellung des Motors und Umwelt-bewußter Fahrweise nicht vermieden werden können. Hierzu zählen nicht nur Kohlenmonoxid (CO), Kohlenwasserstoffe ("CH") und Stickoxide ($NO_x$), sondern auch Schwermetalle, insbesondere Blei, sowie (vornehmlich bei Zweitaktmotoren und Dieselmotoren) Ruß, Ölreste und raucharnige Abgasbestandteile nach einer nicht vollständig verlaufenen Kraftstoff-Verbrennung.

Die Erfindung betrifft eine Einrichtung zum Filtrieren von Abgasen aus Verbrennungsmotoren gemäß dem Patentanspruch 1.

Bevorzugte Ausführungsformen einer derartigen Einrichtung ergeben sich aus den auf Anspruch 1 rückbezogenen Unteransprüchen und der nachfolgenden Beschreibung.

Die Erfindung betrifft außerdem ein Verfahren zur Reinigung von Abgasen aus Verbrennungsmotoren durch Filtration gemäß dem Patentanspruch 9.

Bevorzugte Ausführungsformen des Verfahrens sind dem auf Anspruch 9 rückbezogenen Unteranspruch und der nachfolgenden Beschreibung zu entnehmen.

Die Erfindung wird nachfolgend unter Bezugnahme auf die Zeichnungen näher erläutert. Es zeigen:

Figur 1 als eine Ausführungsform der erfindungsgemäßen Einrichtung eine Einrichtung zum Filtrieren von Abgasen im Längsschnitt;

Figur 2 die Ringplatte 5 in der Einrichtung nach Figur 1 im Querschnitt; und

Figur 3 eine weitere Einrichtung gemäß der Erfindung, wie sie bevorzugt für Zweitaktmotoren und Dieselmotoren verwendet werden kann, im Längsschnitt.

Die erfindungsgemäße Einrichtung zum Filtrieren von Abgasen aus Verbrennungsmotoren kann an beliebiger Stelle im Bereich des Abgassystems eines Kraftfahrzeugs zwischen dem Punkt, an dem die Abgase aus dem Verbrennungsraum austreten, und dem Punkt, an dem die Abgase am Auspuff-Endrohr in die Umgebung ausströmen, eingebaut werden. Schon durch diese vielseitige Einsatzmöglichkeit ist sie vergleichbaren Einrichtungen des Standes der Technik überlegen. Erfindungsgemäß ist es bevorzugt, daß die Filtereinrichtung im sogenannten Auspufftopf eingebaut ist. Es sind jedoch auch andere Bereiche des Abgassystems für den Einbau geeignet.

Die Filtereinrichtung gemäß der Erfindung umfaßt ein Gehäuse 1, das eine oder mehrere Einströmöffnung(en) 2 und eine oder mehrere Ausströmöffnung(en) 3 aufweist. Diese sind mit dem Fachmann an sich bekannten Mitteln mit den Abgase zuführenden Teilen 2 a und Abgase abführenden Teilen 3 a des Abgassystems verbindbar ausgestaltet und werden zum Betrieb der erfindungsgemäßen Filtereinrichtung mit diesen lösbar verbunden.

In dem Gehäuse 1 der erfindungsgemäßen Filtereinrichtung finden sich bzw. sind angeordnet Einrichtungen zur drosselungsarmen Führung des Abgasstroms von der/den Einströmöffnung(en) 2 durch

- einen Expansionsraum 4, dessen Querschnitt den Strömungsquerschnitt der Einströmöffnung(en) 2 um ein Mehrfaches übersteigt,

- eine im äußeren Bereich 5 b mit einer Vielzahl von Löchern zum Durchströmen der Abgase versehene, im zentralen Bereich 5 a den Expansionsraum 4 gegenüber dem übrigen Bereich des Gehäuses 1 gasdicht abschließende Ringplatte 5,

- einen zwischen einem ersten perforierten Zylindermantel 6, dessen Achse koaxial zur Gehäuseachse 1 a ist, und einem zweiten perforierten Zylindermantel 7, dessen Achse koaxial mit der des ersten Zylindermantels 6 ist und der einen größeren Umfang als der erste Zylindermantel 6 aufweist, angeordneten Filtereinsatz 8, und

- danach unmittelbar zu der/den Ausströmöffnung(en) 3 des Gehäuses 1 in Richtung auf das Abgas-stromabwärts gelegene Auspuff-Endrohr des Abgassystems.

Die äußere Form des Gehäuses 1 ist als solche nicht kritisch. Sie kann bevorzugt zylindrisch sein. Es ist jedoch auch eine quader-artige Form möglich. Genauso können mehrere der genannten geometrischen Formen nebeneinander zu einer Anordnung von mehreren miteinander verbundenen Filtereinrichtungen parallel oder in Serie gekoppelt sein. Dies wird sich gerade bei Verbrennungsmotoren mit hoher Abgasmenge empfehlen.

Das Gehäuse der erfindungsgemäßen Filtereinrichtung kann in einer bevorzugten Ausführungsform beispielsweise aus einem äußeren Zylindermantel mit einem Deckel 9 mit der/den Einströmöffnung(en) 2 und einem demontierbaren Boden 10 mit der/den Ausströmöffnung(en) 3 bestehen. Der sich im Innern des Gehäuses 1 von der/den Einströmöffnung(en) 2 in stromabwärtiger Richtung erstreckende Expansionsraum 4 wird gegen den übrigen Teil des Gehäuses 1 der Filtereinrichtung durch eine Ringplatte 5 abgeschlossen Dabei ist die Ringplatte 5 in ihrem zentralen Bereich 5 a massiv und schließt den Expansionsraum 4 vom übrigen Teil des Gehäuses gasdicht ab. In diesem Bereich wird die Ringplatte 5 mittels eines Verbindungsstabes axial mit dem demontierbaren Boden 10 des Gehäuses verbunden. Dabei kann der Verbindungsstab an der Ringplatte 5 angeschweißt oder mit einer Schraubenmutter befestigt sein; an dem demontierbaren Boden 10 ist er in der Praxis mit einer Schraubenmutter befestigt. Diese Anordnung erleichtert wesentlich das Auswechseln oder Kontrollieren des Filtereinsatzes 8.

In ihrem Randbereich 5 b weist die Ringplatte 5 eine Vielzahl von Durchbrechungen oder Löchern auf, durch die die Abgase aus dem Expansionsraum 4 in den Bereich zwischen dem äußeren Zylindermantel des Gehäuses 1 und dem Filtereinsatz strömen können. Die Form der Durchbrechungen oder Löcher ist nicht kritisch; sie sollten jedoch ausreichend groß sein, um nicht zu einer Drosselung des Abgasstroms Anlaß zu geben.

Zwischen dem zentralen Bereich 5 a der Ringplatte 5 und dem demontierbaren Boden 10 des Gehäuses 1 ist der Filtereinsatz 8 angeordnet. Dieser erstreckt sich zwischen einem ersten perforierten Zylindermantel 6, dessen Achse koaxial zur Gehäuseachse 1 a ist, und einem zweiten perforierten Zylindermantel 7, dessen Achse koaxial zur Gehäuseachse 1 a und koaxial zur Achse des ersten Zylindermantels 6 ist. Der zweite Zylindermantel 7 hat einen größeren Umfang als der erste Zylindermantel 6, so daß sich zwischen den beiden Zylindermänteln 6, 7 ein im Querschnitt ringförmiger Raum ergibt, in dem der Filtereinsatz 8 angeordnet ist. Dessen Dicke ist an sich nicht kritisch; er muß jedoch so dick sein, daß eine ausreichende Filterung der Abgase ohne wesentliche Drosselung des Abgasstroms erreicht wird. Praktischerweise liegt die Dicke im Bereich zwischen 10 und 25 mm, besonders bevorzugt bei 15 bis 20 mm, ist jedoch nicht auf diesen Bereich beschränkt. In diesem Bereich werden jedoch die besten Filtrationsergebnisse erzielt.

An Stelle der beiden perforierten Zylindermäntel 6, 7 können auch Gewebe oder Netze aus Draht verwendet werden, um dem Filtereinsatz-Material 8 den notwendigen mechanischen Halt zu geben.

Der Filtereinsatz 8 besteht aus einem locker gepackten Faservlies, in dem die watteartig ungeordneten Fasern in der Regel unterschiedliche Längen haben und gegen erhöhte Temperaturen stabil sein müssen, um nicht zu einer Masse zusammenzubacken oder zusammenzuschmelzen, die dann eine Drosselung des Abgasstroms und damit eine Verringerung der Motorleistung hervorrufen würde. Gemäß einer bevorzugten Ausführungsform der Erfindung besteht der Filtereinsatz 8 aus hitzebeständigen Aluminiumoxidfasern, Siliciumoxidfasern, Aluminiumoxid-Siliciumoxid-Fasern, Keramikfasern, Glasfasern, Cellulosefasern und deren Mischungen. Es können jedoch auch Mischungen der genannten Fasern mit anderen geeigneten hitzebeständigen Fasern oder auch Fasern verwendet werden, die mit einer hitzebeständigen Schicht aus einem der oben genannten Materialien überzogen sind. Die Faserdurchmesser liegen in einer besonders bevorzugten Ausführungsform bei 3 bis 50 $\mu$m, am meisten bevorzugt bei 3 bis 10 $\mu$m. Dünnere Fasern werden aufgrund ihrer gesundheitsgefährdenden Eigenschaften nicht verwendet.

In einer weiteren bevorzugten Ausführungsform der Erfindung können beispielsweise im Bereich des Filtereinsatzes 8, z. B. auf den den Filtereinsatz bildenden Fasern, solche Substanzen angeordnet oder auch aufgebracht sein, die die vollständige Verbrennung und/oder die Entgiftung der Abgase fördern, beispielsweise durch Katalyse. Solche Substanzen können beispielsweise katalytisch in der vollständigen Verbrennung der Kraftstoffe oder deren (nicht vollständige) Verbrennungsprodukte wirksame Metalle oder Metallverbindungen sein, wie sie aus dem Stand der Technik für diese Zwecke bekannt sind. Beispiele hierfür sind Katalysatoren, die die vollständige Verbrennung der kohlenwasserstoff-artigen Kraftstoffe zu $CO_2$ oder alkoholartigen Kraftstoffe zu $CO_2$ oder des Verbrennungszwischenproduktes CO zu $CO_2$ fördern.

In einer weiteren bevorzugten Ausführungsform der erfindungsgemäßen Filtereinrichtung können die Netze oder Gewebe aus Draht, die anstelle der Zylindermäntel 6, 7 dem Filtereinsatz 8 mechanischen Halt geben, mit einem Katalysatormaterial beschichtet sein, das die oben beschriebenen Reaktionen fördert.

Alternativ dazu entspricht es einer weiteren bevorzugten Ausführungsform der Erfindung, derartige Substanzen an anderer Stelle im Abgasstrom - sowohl innerhalb der erfindungsgemäßen Filtereinrichtung als auch davor oder dahinter im Abgasstrom, anzuordnen oder aufzubringen. In einer besonders bevorzugten Ausführungsform der Erfindung wird ein herkömmlicher geregelter Katalysator mit einer Filtereinrichtung gemäß der Erfindung kombiniert, was zu einer besonders umweltverträglichen Abgasreinigung durch Katalyse und damit kombinierte Filtration der Abgase führt. Diese Ausführungsform der Erfindung führt in der Praxis zu überraschenden Ergebnissen insofern als selbst strengste Normen der Abgaswerte erfüllt werden.

Eine weitere bevorzugte Ausführungsform der erfindungsgemäßen Filtereinrichtung ist darin zu sehen, daß der Expansionsraum 4 so ausgebildet ist, daß er sich am stromabwärts gelegenen Ende 4 a verengt. Die Abgase mit allen darin enthaltenen Bestandteilen werden dadurch beschleunigt. Praktischerweise werden sie am Ausgang 4 a eines so geformten Expansionsraumes auf eine oder mehrere Prallplatte(n) 11 gelenkt. Dort scheiden sich feste und/oder flüssige Abgas-Komponenten infolge der Schwerkraft (Zentrifugations-Effekt) ab.

Dies kann beispielsweise von besonderem Vorteil bei Abgasen aus Zweitaktmotoren sein, in denen aus dem Verbrennungsraum immer mehr oder weniger große Mengen an Öl ausgetragen werden. Diese werden an der Prallplatte 11 abgeschieden, im Ölsammelraum 12 gesammelt und gezielt über den in an sich bekannter Art verschließbaren Ölablaß 13 abgelassen, wenn eine Entsorgung derartiger Substanzen möglich ist. In gleicher Weise lassen sich aus Abgasen von Dieselmotoren schon auf diesem einfachen Weg relativ große Mengen Ruß abscheiden, die dann mit anderen, beispielsweise flüssigen abgeschiedenen Abgas-Komponenten ebenfalls im Sammelraum 12 gesammelt und bei Gelegenheit über den Ablaß 13 geregelt entsorgt werden können.

Gemäß einer weiteren bevorzugten Ausführungsform umfaßt die erfindungsgemäße Filtereinrichtung eine oder mehrere Ausströmöffnung(en) 3 in der den demontierbaren Boden 10 bildenden Platte des Gehäuses, wobei dieser demontierbare Boden 10 lösbar mit dem Gehäuse 1 in der Weise verbunden ist, daß die Abgase in das Gehäuse 1 nur über die Einströmöffnung(en) 2 ein- und nur über die Ausströmöffnung(en) 3 abströmem können.

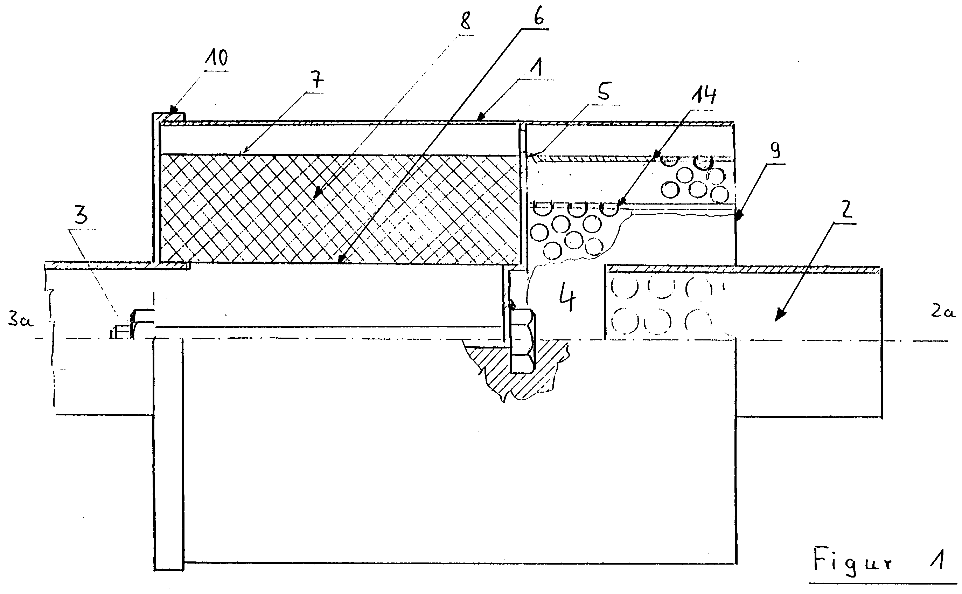

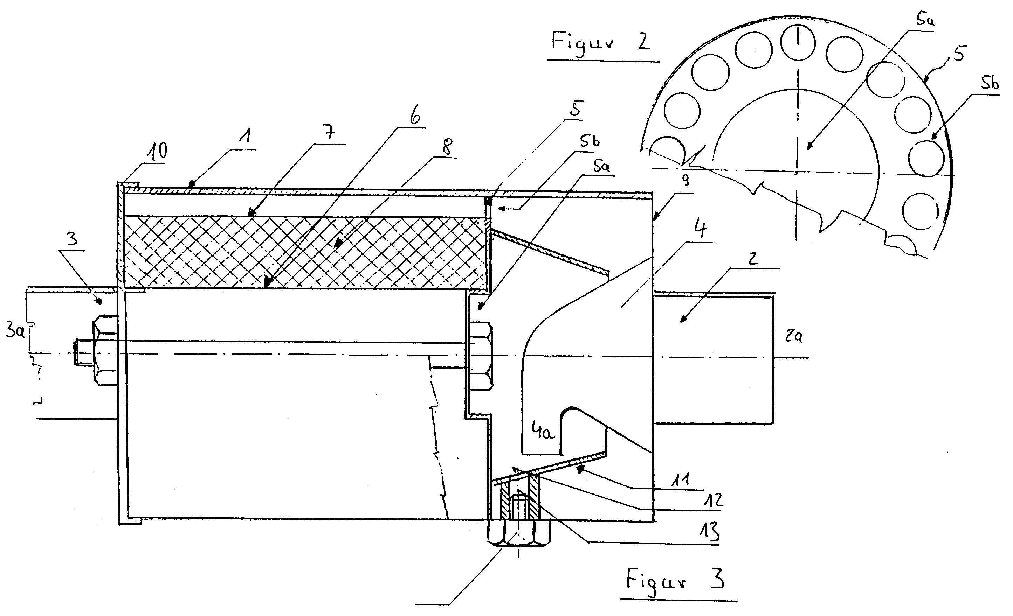

Weiter ist es insbesondere dann, wenn die erfindungsgemäße Filtereinrichtung im Auspufftopf angeordnet ist, besonders vorteilhaft, wenn im Expansionsraum eine oder mehrere zylindermantelförmige, konzentrische, perforierte Hüllen angeordnet sind. Mit diesen wird ohne nennenswerte zusätzliche Drosselung der Abgase erreicht, daß eine erhebliche Schalldämmung eintritt. Die Abgase können diese perforierten Hüllen, die in Figur 1 mit 14 bezeichnet sind, ohne nennenswerte Drosselung durchströmen.

In dem erfindungsgemäßen Verfahren zur Reinigung von Abgasen aus Verbrennungsmotoren durch Filtration in einem in den Abgasstrom an beliebiger Stelle des Abgassystems montierbaren, eine oder mehrere Einströmöffnung(en) 2 und eine oder mehrere Ausströmöffnung(en) 3 umfassenden Gehäuse 1 mit Einrichtungen zur drosselungsarmen Führung des Abgasstroms werden also die Abgase

- von der/den Einströmöffnung(en) 2 durch einen Expansionsraum 4 geführt, dessen Querschnitt den Strömumgsquerschnitt der Einströmöffnung(en) 2 um ein Mehrfaches übersteigt,
- durch eine im äußeren Bereich 5 b mit einer Vielzahl von Löchern zum Durchströmen der Abgase versehene, im zentralen Bereich 5 a den Expansionsraum 4 gegenüber dem übrigen Bereich des Gehäuses 1 gasdicht abschließende Ringplatte 5 geführt,
- durch einen zwischen einem ersten perforierten Zylindermantel 6, dessen Achse koaxial zur Gehäuseachse 1 a ist, und einem zweiten perforierten Zylindermantel 7, dessen Achse koaxial mit der des ersten Zylindermantels 6 ist und der einen größeren Umfang als der erste Zylindermantel 6 aufweist, angeordneten Filtereinsatz 8 geführt, und
- danach unmittelbar zu der/den Ausströmöffnung(en) 3 des Gehäuses 1 in Richtung auf das Abgas-stromabwärts gelegene Auspuff-Endrohr des Abgassystems geführt.

Gemäß einer bevorzugten Ausführungsform des Verfahrens werden die Abgase nach Einströmen in den Expansionsraum 4 in einen sich in Stromrichtung verengenden Bereich 4 a des Expansionsraums 4 geführt. Dadurch werden sie auf eine Prallplatte 11 gelenkt, an der sich durch einen Zentrifugationseffekt feste und/oder flüssige Abgas-Komponenten abscheiden.

Die Herstellung der erfindungsgemäßen Filtereinrichtungen kann in an sich bekannter Weise erfolgen, wobei es als vorteilhaft anzusehen ist, daß die Massenherstellung ohne großen technischen Aufwand realisiert werden kann.

Die bei Dauerbetrieb im Stadtverkehr realisierte Verminderung des Schadstoffgehalts in Abgasen von verschiedenen Kraftfahrzeugen (Wartburg, Lada, BMW) ist verblüffend und liegt - in Abhängigkeit von der Betriebsart, der Drehzahl usw. zwischen 40 und über 70 %. So ließ sich beispielsweise der Bleigehalt im Auspuffgas von Fahrzeugen, die mit verbleitem Kraftstoff betrieben wurden, bei 2000 U/min um 76 % und bei 3000 U/min um 43 % reduzieren. Der CO-Gehalt im Abgas ließ sich um 50 bis 75 %, der CH-Wert um bis zum 85 % verringern. Die Standzeit einer Filtereinrichtung gemäß der Erfindung betrug dabei zwischen 10.000 und 15.000 km, ohne daß ein Austausch des Filtereinsatzes erforderlich war und ohne daß die angegebene Filterleistung wesentlich nachließ. Dies ist fast doppelt so lang, verglichen mit den Standzeiten bisher bekannter Filter.

Bei Service- und Überholungsarbeiten ließ sich der Filtereinsatz der Filtereinrichtung wesentlich besser austauschen als dies bei bisher bekannten Filtereinsätzen möglich war. Die erfindungsgemäße Filtereinrichtung führt also neben der verbesserten Reinigung der Abgase auch zu einer Einsparung an Service-Zeit dadurch, daß es nicht mehr erforderlich ist, die gesamte Einrichtung zu demontieren und auseinanderzunehmen.

Darüberhinaus wurde beobachtet, daß es ohne Leistungsverlust zu einem Rückgang des Kraftstoffverbrauchs bei standardisierten Fahrcyclen kommt. Da sich Vergleichsfahrzeuge von den Testfahrzeugen nur durch die erfindungsgemäße Filtereinrichtung unterschieden, wird dies - zumindest teilweise - auf die Gegenwart der erfindungsgemäßen Filtereinrichtung zurückgeführt.

**Patentansprüche**

1. Einrichtung zum Filtrieren von Abgasen aus Verbrennungsmotoren im Bereich des Abgassystems zwischen Austritt der Abgase aus dem Verbrennungsraum und Ausströmen in die Umgebung am Auspuff-Endrohr mit einem in den Abgasstrom an beliebiger Stelle des Abgassystems montierbaren, eine oder mehrere Einströmöffnung(en) (2) und eine oder mehrere Ausströmöffnung(en) (3) umfassenden Gehäuse (1) und in dem Gehäuse (1) angeordneten Einrichtungen zur drosselungsarmen Führung des Abgasstroms von der/den Einströmöffnung(en) (2) durch

   - einen Expansionsraum (4), dessen Querschnitt den Strömungsquerschnitt der Einströmöffnung(en) (2) um ein Mehrfaches übersteigt,
   - eine im äußeren Bereich (5 b) mit einer Vielzahl von Löchern zum Durchströmen der Abgase versehene, im zentralen Bereich (5 a) den Expansionsraum (4) gegenüber dem übrigen Bereich des Gehäuses (1) gasdicht abschließende Ringplatte (5),
   - einen zwischen einem ersten perforierten Zylindermantel (6), dessen Achse koaxial zur Gehäuseachse (1 a) ist, und einem zweiten perforierten Zylindermantel (7), dessen Achse koaxial mit der des ersten Zylindermantels (6) ist und der einen größeren Umfang als der erste Zylindermantel (6) aufweist, angeordneten Filtereinsatz (8), und
   - danach unmittelbar zu der/den Ausströmöffnung(en) (3) des Gehäuses

   (1) in Richtung auf das Abgas-stromabwärts gelegene Auspuff-Endrohr des Abgassystems.

2. Einrichtung nach Anspruch 1, welche im Auspufftopf des Abgassystems angeordnet ist.

3. Einrichtung nach einem der Ansprüche 1 oder 2, deren Expansionsraum (4) so ausgebildet ist, daß er sich am stromabwärts gelegenen Ende (4 a) verengt und die Abgase auf eine oder mehrere Prallplatte(n) (11) lenkt, an der/denen sich feste und/oder flüssige Abgas-Komponenten abscheiden.

4. Einrichtung nach einem oder mehreren der Ansprüche 1 bis 3, welche einen Sammelraum (12) für abgeschiedene feste und/oder flüssige Abgas-Komponenten und eine verschließbare Öffnung (13) zum Ablassen der abgeschiedenen Komponenten umfaßt.

5. Einrichtung nach einem oder mehreren der Ansprüche 1 bis 4, welche eine oder mehrere Ausströmöffnung(en) in der im Abgasstrom stromabwärts gelegenen demontierbaren Bodenplatte (10) umfaßt, wobei die Bodenplatte (10) lösbar mit dem Gehäuse (1) in der Weise verbunden ist, daß die Abgase nur über die Einströmöffnung(en) (2) ein- und über die Ausströmöffnung(en) (3) abströmen können.

6. Einrichtung nach einem oder mehreren der Ansprüche 1 bis 5, worin der Filtereinsatz (8) aus hitzebeständigen Aluminiumoxid-Fasern, Siliciumoxid-Fasern, Aluminiumoxid-Siliciumoxid-Fasern, Keramik-Fasern, Cellulosefasern, Glasfasern und deren Mischungen oder Mischungen der genannten Fasern mit anderen hitzebeständigen Fasern besteht.

7. Einrichtung nach einem oder mehreren der Ansprüche 1 bis 6, worin zusätzlich im Abgasstrom die Verbrennung und/oder Entgiftung der Abgase katalytisch fördernde Substanzen angeordnet und/oder aufgebracht sind.

8. Einrichtung nach einem oder mehreren der Ansprüche 1 bis 7, worin der Filtereinsatz (8) von zwei Geweben oder Netzen aus Draht gehalten wird, die unterschiedlichen Außendurchmesser aufweisen, wobei gegebenenfalls die Drahtgewebe oder -netze mit einem Katalysator-Material beschichtet sind.

9. Verfahren zur Reinigung von Abgasen aus Verbrennungsmotoren durch Filtration in einem in den Abgasstrom an beliebiger Stelle des Abgassystems montierbaren, eine oder mehrere Einströmöffnung(en) (2) und eine oder mehrere Ausströmöffnung(en) (3) umfassenden Gehäuse (1) mit Einrichtungen zur drosselungsarmen Führung des Abgasstroms, worin die Abgase

- von der/den Einströmöffnung(en) (2) durch einen Expansionsraum (4) geführt werden, dessen Querschnitt den Strömumgsquerschnitt der Einströmöffnung(en) (2) um ein Mehrfaches übersteigt,
- durch eine im äußeren Bereich (5 b) mit einer Vielzahl von Löchern zum Durchströmen der Abgase versehene, im zentralen Bereich (5 a) den Expansionsraum (4) gegenüber dem übrigen Bereich des Gehäuses (1) gasdicht abschließende Ringplatte (5) geführt werden,
- durch einen zwischen einem ersten perforierten Zylindermantel (6), dessen Achse koaxial zur Gehäuseachse (1 a) ist, und einem zweiten perforierten Zylindermantel (7), dessen Achse koaxial mit der des ersten Zylindermantels (6) ist und der einen größeren Umfang als der erste Zylindermantel (6) aufweist, angeordneten Filtereinsatz (8) geführt werden, und
- danach unmittelbar zu der/den Ausströmöffnung(en) (3) des Gehäuses (1) in Richtung auf das Abgas-stromabwärts gelegene Auspuff-Endrohr des Abgassystems geführt werden.

10. Verfahren nach Anspruch 9, worin die Abgase in einen sich in Stromrichtung verengenden Expansionsraum (4) geführt werden, wodurch sie auf eine Prallplatte (11) gelenkt werden, an der sich feste und/oder flüssige Abgas-Komponenten abscheiden, welche gegebenenfalls über eine Ablaßöffnung (13) entfernt werden.

Figur 1

EP 0 511 415 A1

Figur 2

Figur 3

EP 0 511 415 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| Y | FR-A-2 645 906 (GILARDINI S.P.A.)<br><br>* Seite 1, Zeile 1-29 *<br>* Seite 2, Zeile 11 - Seite 6, Zeile 6 *<br>* Abbildung 2 *<br>--- | 1-3,5, 7-10 | F01N3/02<br>F01N1/08 |
| Y | US-A-3 898 064 (TAO ET AL)<br><br>* Spalte 2-6; Abbildungen 1,4 *<br>--- | 1-3,5, 7-10 | |
| A | EP-A-0 308 525 (ASHI GLASS COMPANY LTD)<br>* Spalte 8, Zeile 41-4; Abbildung 5 *<br>--- | 4 | |
| A | PATENT ABSTRACTS OF JAPAN<br>vol. 014, no. 217 (M-097)8. Mai 1990<br>& JP-A-02 049 913 ( TOYOTA MOTOR CORP ) 20.<br>Februar 1990<br>* Zusammenfassung *<br>--- | 6 | |
| A | PATENT ABSTRACTS OF JAPAN<br>vol. 013, no. 595 (C-672)27. Dezember 1989<br>& JP-A-01 252 588 ( MATSUSHITA ELECTRIC IND CO LTD ) 9. Oktober 1989<br>* Zusammenfassung *<br>--- | 6 | **RECHERCHIERTE SACHGEBIETE (Int. Cl.5 )**<br><br>F01N<br>B01D |
| A | US-A-3 826 067 (WIDER ET AL)<br><br>----- | | |

Der vorliegende Recherchenbericht wurde für alle Patentansprüche erstellt

| Recherchenort | Abschlußdatum der Recherche | Prüfer |
|---|---|---|
| DEN HAAG | 16 DEZEMBER 1991 | KLINGER T.G. |

EPO FORM 1503 03.82 (P0400)